# FASCICULE DE BREVET EUROPEEN

(11) **EP 1 043 216 B1**
(45) Date de publication et mention de la délivrance du brevet: **23.07.2003**
(21) Numéro de dépôt: 00420056.4
(22) Date de dépôt: 29.03.2000
(51) Int. Cl.: B62D 25/16, B62D 27/04

(54) **Dispositif de fixation pour garde-boue de véhicule routier ou agricole**
Befestigungsvorrichtung für Radabdeckung für Strassen- oder Landwirtschaftsfahrzeug
Fixing device for a mudguard for road or agricultural vehicle

(30) Priorité: 29.03.1999 FR 9904197
(43) Date de publication de la demande: 11.10.2000
(73) Titulaire: Polyrim, 07100 Saint-Marcel les Annonay (FR)
(72) Inventeur: Fichet, Jérôme M., 07100 Annonay (FR)
(74) Mandataire: Bratel, Gérard

(56) Documents cités:
- FR-A- 2 556 301
- GB-A- 1 526 212

## Description

La présente invention concerne un dispositif de fixation pour garde-boue de véhicule industriel de transport routier, de véhicule agricole ou analogue. Plus particulièrement, cette invention se rapporte à un dispositif de fixation du genre de ceux comprenant un ou plusieurs tubes-supports, le ou chaque tube support, de forme droite ou coudée, étant associé à une embase fixée elle-même sur une partie du véhicule concerné, notamment sur le châssis de ce véhicule.

La fixation des garde-boue de véhicules routiers au moyen de tubes-supports est bien connue. Par exemple, dans le cas d'un garde-boue réalisé en trois éléments, tel que celui du brevet français n° 2 556 301 (FICHET), chaque élément extrême du garde-boue est réalisé d'une seule pièce, par moulage, avec un sabot de fixation en forme de caisson, qui est traversé par un tube-support horizontal, lui-même fixé au châssis du véhicule concerné. Dans cette réalisation, comme dans beaucoup d'autres, la liaison entre le tube-support et le garde-boue est assurée au moyen de colliers de serrage, munis de vis de serrage.

Dans les réalisations existantes de tubes-supports pour garde-boue, le tube habituellement en acier est soudé sur une embase, elle aussi en acier, cet assemblage soudé étant renforcé par un gousset spécial en forme de " U ", ou par de simples goussets multiples en tôle épaisse, disposés entre le tube et l'embase.

Une telle réalisation a pour inconvénient principal un risque de déformation ou de fragilisation de la fixation du tube-support, ceci étant dû aux nombreuses soudures réalisées entre l'embase, le tube et les goussets de renfort. Le poids du dispositif, résultant de l'emploi d'acier pour tous les composants, est élevé. Un traitement de surface anti-corrosion est aussi indispensable. Par ailleurs, la rigidité de l'assemblage a pour conséquence une transmission, au garde-boue et aux accessoires portés par celui-ci, des vibrations en provenance du châssis du véhicule.

Un autre type de réalisation existante consiste en un emmanchement du tube-support dans une embase constituée d'une bague recevant directement ce tube, entourée d'une épaisse couche d'élastomère contenue dans un gros tube, lui-même soudé sur une plaque vissée au châssis du véhicule. Cette réalisation assure, grâce à la partie en élastomère, une fonction d'amortissement des vibrations, mais elle ne permet pas d'utiliser des tubes-supports coudés, car l'emmanchement du tube-support dans la partie en élastomère ne résisterait pas au couple de rotation engendré par le poids du garde-boue. Or l'utilisation de tubes-supports coudés est souvent souhaitable, pour positionner le garde-boue à la hauteur désirée, en fonction notamment de l'utilisation du véhicule, les points de fixation prévus sur le châssis du véhicule ne coïncidant pas nécessairement avec les positions des organes de fixation tels que colliers, intégrés aux garde-boue.

Par ailleurs, la dernière réalisation évoquée ci-dessus est relativement complexe et, par conséquent, d'un coût élevé.

Un autre example de réalisation de dispositif de fixation pour garde-boue de véhicule routier est fourni par le document GB-1 526 212, à partir duquel est établi le préambule de la revendication 1.

La présente invention vise à éviter tous les inconvénients précédemment exposés, en fournissant un dispositif de fixation pour garde-boue, particulièrement adapté au cas d'un tube-support coudé en ce sens qu'il en assure la retenue en rotation, tout en étant capable d'absorber les vibrations grâce à une certaine souplesse, le dispositif proposé étant, par ailleurs, simple et économique.

A cet effet, l'invention a essentiellement pour objet un dispositif de fixation pour garde-boue de véhicule routier ou agricole, du genre indiqué en introduction, dans lequel une partie terminale du tube-support est introduite avec un jeu radial dans une partie tubulaire de l'embase, et une matière de liaison, notamment une matière de type élastomérique, thermoplastique ou thermodurcissable, vient remplir l'interstice annulaire entre la partie terminale du tube-support et la partie tubulaire de l'embase.

Avantageusement, la matière de liaison entre le tube-support et l'embase est une matière souple, réalisant une liaison à propriétés d'amortissement.

Dans une forme de réalisation préférée de l'invention, la partie tubulaire de l'embase comporte intérieurement des conformations en relief, telles que des nervures parallèles à son axe, tandis que la partie terminale du tube-support présente extérieurement une conformation telle que crantage ou moletage, la matière de liaison remplissant les espaces entre les conformations en relief de la partie tubulaire de l'embase et pénétrant aussi dans la conformation telle que crantage ou moletage du tube-support, de manière à assurer une immobilisation en rotation du tube-support relativement à l'embase.

Dans l'ensemble, l'on obtient ainsi un dispositif de fixation pour garde-boue qui possède les avantages suivants :

La matière de liaison, qui peut être amenée par injection ou par coulée par gravité pour combler le jeu radial initial entre le tube-support et l'embase, assure une liaison sans soudure et d'une certaine souplesse qui dépend de la dureté de cette matière et est aussi proportionnelle à la valeur dudit jeu radial. La souplesse de cette liaison crée un " filtre ", amortissant les vibrations transmises au garde-boue par le châssis du véhicule. La réalisation d'une liaison sans soudure métallique évite les phénomènes de contraintes résiduelles et de fragilisation dans les zones de soudure. Elle évite aussi les défauts de géométrie entre la face de fixation de l'embase sur le châssis, d'une part, et l'axe du tube-support, d'autre part, défauts qui sont dûs aux dilatations successives et aux retraits, pendant et après les nombreuses opérations de soudure, dans les réalisations actuelles.

Il en résulte une fixation de garde-boue géométriquement précise, à faible concentration de contraintes, et procurant un allongement de la durée de vie du garde-boue et des accessoires éventuellement fixés sur le garde-boue. En particulier, la matière de liaison réalisant un filtrage efficace des vibrations transmises par le châssis du véhicule, on préserve non seulement le garde-boue, mais aussi les feux arrière, fixés habituellement au garde-boue, feux dont les ampoules électriques possèdent des filaments qui sont sensibles aux vibrations.

De plus, dans la mesure où l'embase et le tube-support possèdent des conformations sur lesquelles la matière de liaison s'accroche, on évite toute rotation du tube-support (au-delà du débattement angulaire infime résultant de la souplesse de la matière de liaison). Ainsi, en particulier, un tube-support coudé sera facilement immobilisé dans la position de montage désirée, c'est-à-dire avec l'orientation souhaitée selon les besoins.

A ce sujet, on notera qu'une même embase universelle peut être combinée avec des tubes coudés de différents déports, ce qui rend le dispositif de fixation, objet de l'invention, bien adapté aux fabrications en petites séries, typiques des véhicules industriels.

La faible concentration de contraintes et la suppression des soudures, dans le dispositif objet de l'invention, permet aussi l'utilisation d'un tube-support de faible épaisseur, notamment en alliage d'aluminium, l'embase étant elle aussi réalisable en alliage d'aluminium, par moulage. Une telle réalisation " tout aluminium" " dispense l'ensemble d'un traitement anti-corrosion coûteux, et le dispositif peut même être monté sur le véhicule sans peinture de finition.

Enfin, bien que par principe la matière de liaison se situe entre la partie terminale du tube-support et la partie tubulaire de l'embase, on notera que cette matière de liaison peut posséder un prolongement à l'extérieur de l'embase, autour du tube-support, formant ainsi un fourreau de renfort du tube-support, dans le prolongement de l'embase.

L'invention sera mieux comprise à l'aide de la description qui suit, en référence au dessin schématique annexé représentant, à titre d'exemple, une forme d'exécution de ce dispositif de fixation pour garde-boue de véhicule routier ou agricole :
Figure 1 est une vue partielle, en perspective, d'un garde-boue fixé au moyen d'un dispositif conforme à la présente invention ;
Figure 2 est une vue en perspective éclatée des éléments de ce dispositif de fixation, à savoir le tube-support et son embase ;
Figure 3 est une vue en coupe longitudinale de l'assemblage réalisé entre le tube-support et l'embase ;
Figure 4 est une vue en coupe transversale de cet assemblage, selon IV-IV de figure 3.

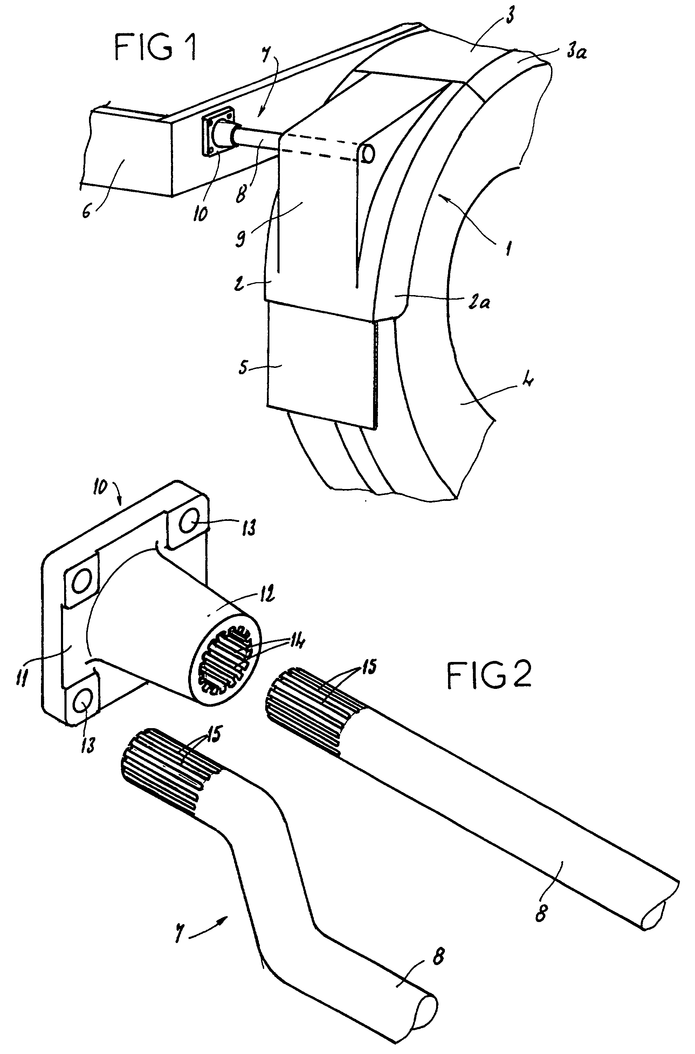

Le garde-boue représenté sur la figure 1, désigné dans son ensemble par la référence 1, se compose de deux éléments extrêmes 2 symétriques (dont un seul est ici visible), et d'un élément intermédiaire 3 qui réunit les deux éléments extrêmes 2, les trois éléments étant réalisés en matière synthétique. L'ensemble composé de ces trois éléments possède une forme traditionnelle de garde-boue, apte à envelopper la partie supérieure d'une roue 4 à pneumatiques de véhicule routier utilitaire. Les éléments 2 et 3 du garde-boue 1 sont pourvus de rebords latéraux, respectivement 2a et 3a, aptes à arrêter les projections de boue, pierres et autres. Ce garde-boue 1 peut être complété par une bavette souple 5 qui prolonge vers le bas l'un des éléments extrêmes 2.

Le montage du garde-boue 1 sur le châssis 6 du véhicule routier concerné est réalisé au moyen de deux dispositifs de fixation, dont l'un seulement, désigné dans son ensemble par la référence 7, est représenté au dessin. Chaque dispositif de fixation 7 comprend un tube-support 8 horizontal, et de direction générale transversale. Le tube-support 8 traverse une face latérale d'un sabot de fixation 9, réalisé d'une seule pièce avec un élément extrême 2 du garde-boue 1, et il est lié au sabot 9 par des moyens de serrage, tels que des colliers (non concernés par la présente invention, et non représentés).

Une extrémité du tube-support 8 est assemblée à une embase 10, par l'intermédiaire de laquelle ce tube-support 8 est fixé à un longeron du châssis 6. La figure 2 montre plus en détail l'embase 10, et la partie terminale du tube-support 8 prévue pour être assemblée à l'embase 10. Comme le montre cette figure, le tube-support 8 peut être un tube rectiligne, ou au contraire, un tube coudé, grâce auquel l'axe de la fixation au sabot 9 peut être déporté par rapport au point de fixation sur le châssis 6. Dans tous les cas, il s'agit avantageusement d'un tube en alliage d'aluminium.

L'embase 10, métallique et de préférence réalisée également en alliage d'aluminium, se présente comme une plaque 11 carrée ou rectangulaire, au centre de laquelle fait saillie une courte partie tubulaire 12, prévue pour recevoir la partie terminale du tube-support 8. La plaque 11 comporte, à ses quatre angles, des trous 13 pour le passage de vis fixant l'embase 10 contre le longeron du châssis 6.

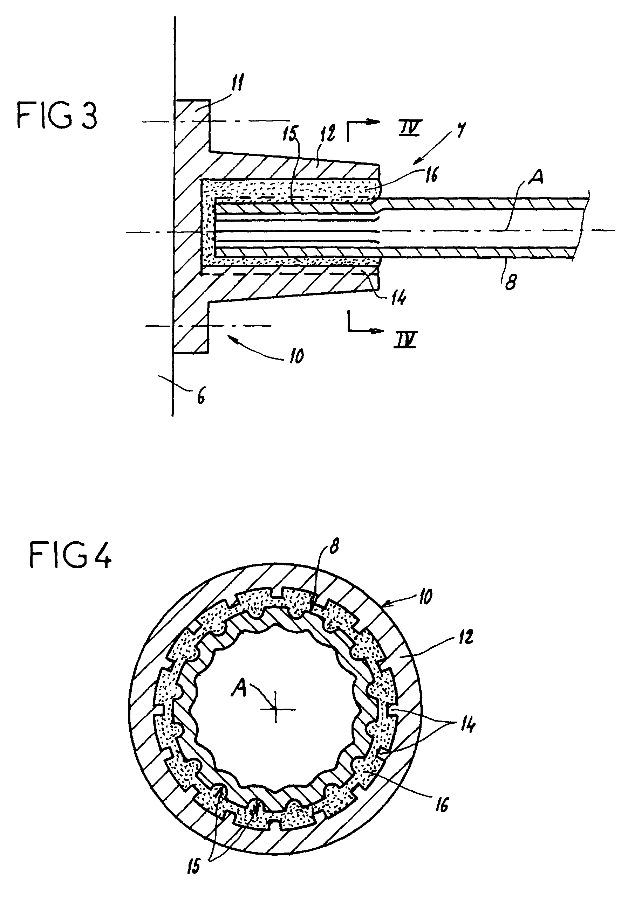

Comme le montrent aussi les figures 3 et 4, la partie tubulaire 12 de l'embase 10 présente, intérieurement, une succession de nervures 14 parallèles à l'axe A de cette partie tubulaire 12, et s'étendant sur au moins une fraction de sa longueur. Dans le cas d'une embase 10 en alliage d'aluminium, les nervures 14 peuvent notamment être obtenues directement par moulage en coquille ou au sable, sans usinage ni matière rapportée.

La partie terminale du tube-support 8, destinée à être introduite dans l'embase 10, présente extérieurement un crantage ou un moletage, se présentant comme une série de stries 15 parallèles à l'axe de cette partie du tube-support 8.

Comme l'illustrent les figures 3 et 4, la partie terminale du tube-support 2 est introduite dans la partie tubulaire 12 de l'embase 10 avec un jeu radial initialement important. Ce jeu est ensuite comblé par une injection, ou coulée par gravité, d'une matière de liaison 16 élastomérique, thermoplastique ou thermodurcissable. La matière 16 remplit tout l'interstice annulaire entre le tube-support 8 et l'embase 10, en pénétrant notamment entre les nervures internes 14 de la partie tubulaire 12 de l'embase 10 et aussi dans les stries 15 de la partie terminale du tube-support 8.

Ainsi, la matière de liaison 16 assure l'assemblage entre le tube-support 8 et l'embase 10, cet assemblage possédant une certaine souplesse tout en réalisant une immobilisation en rotation du tube-support 8, laquelle est d'une importance particulière dans le cas d'un tube-support 8 coudé (voir figure 2) dont l'orientation doit être fixée lors du montage, et conservée.

L'on ne s'éloignerait pas du cadre de l'invention, telle que définie dans les revendications :
- en réalisant les composants du dispositif, que sont le tube-support 8 et l'embase 10, en tout autre métal ou alliage ;
- en choisissant aussi toute matière, plus ou moins souple ou au contraire dure, comme matière de liaison 16 entre le tube-support 8 et l'embase 10 ;
- en remplaçant le crantage ou moletage 15 de la partie terminale du tube-support 8 par toute autre conformation extérieure ou déformation qui soit susceptible d'assurer une immobilisation en rotation dudit tube-support 8, une fois la matière de liaison 16 injectée ou coulée, ladite conformation ou déformation pouvant être obtenue par tout procédé et/ou outillage, par exemple par déformation à la presse ;
- en modifiant la conformation du tube-support 8, lequel peut notamment présenter une section non circulaire, par exemple carrée ou polygonale, dans sa partie éloignée de l'embase 10 et servant à la liaison avec le garde-boue 1 ;
- en destinant ce dispositif de fixation à des garde-boue de toutes configurations, composés d'un seul élément ou de plusieurs éléments, et pouvant équiper tous genres de véhicules, non seulement routiers ou agricoles, mais encore d'autres véhicules industriels et analogues, tels que les engins de travaux publics.

## Revendications

1. Dispositif de fixation (7) pour garde-boue (1) de véhicule routier ou agricole, du genre de ceux comprenant un ou plusieurs tubes-supports, le ou chaque tube-support (8) étant associé à une embase (10) fixée elle-même sur une partie du véhicule concerné, notamment sur le châssis (6) de ce véhicule, **caractérisé en ce qu'**une partie terminale du tube-support (8) est telle qu'après son introduction dans une partie tubulaire (12) de l'embase (10), il subsiste un jeu radial entre ces parties (8,10), qui définit ainsi un interstice annulaire, et **en ce qu'**une matière de liaison (16), notamment une matière de type élastomérique, thermoplastique ou thermodurcissable, remplit l'interstice annulaire.

2. Dispositif de fixation pour garde-boue selon la revendication 1, **caractérisé en ce que** la matière de liaison (16) entre le tube-support (8) et l'embase (10) est une matière souple, réalisant une liaison à propriétés d'amortissement.

3. Dispositif de fixation pour garde-boue selon la revendication 1 ou 2, **caractérisé en ce que** la partie tubulaire (12) de l'embase (10) comporte intérieurement des conformations en relief, telles que des nervures (14) parallèles à son axe (A), tandis que la partie terminale du tube-support (8) présente extérieurement une conformation telle que crantage ou moletage (15), la matière de liaison (16) remplissant les espaces entre les conformations en relief (14) de la partie tubulaire (12) de l'embase (10), et pénétrant aussi dans la conformation telle que crantage ou moletage (15) du tube-support (8), de manière à assurer une immobilisation en rotation du tube-support (8) relativement à l'embase (10).

4. Dispositif de fixation pour garde-boue selon l'une quelconque des revendications 1 à 3, **caractérisé en ce que** la matière de liaison (16) est amenée par injection ou par coulée par gravité, pour combler le jeu radial entre le tube-support (8) et l'embase (10).

5. Dispositif de fixation pour garde-boue selon l'une quelconque des revendications 1 à 4, **caractérisé en ce que** la matière de liaison (16) possède un prolongement à l'extérieur de l'embase (10), autour du tube-support (8).

6. Dispositif de fixation pour garde-boue selon l'une quelconque des revendications 1 à 5, **caractérisé en ce que** le tube-support (8) et l'embase (10) sont réalisés en alliage d'aluminium.

7. Dispositif de fixation pour garde-boue selon l'une quelconque des revendications 1 à 6, **caractérisé en ce que** le tube-support (8) est un tube-support coudé.

## Patentansprüche

1. Befestigungsvorrichtung (7) für die Radabdeckung (1) eines Straßen- oder Landwirtschaftsfahrzeugs, des Typs, der ein oder mehrere Tragrohre umfasst, wobei das oder jedes Tragrohr mit einer Fußplatte (10) verbunden ist, die selbst an einem Teil des betreffenden Fahrzeugs befestigt ist, insbesondere am Fahrgestell (6) dieses Fahrzeugs, **dadurch gekennzeichnet, dass** ein Endstück des Tragrohrs (8) so beschaffen ist, dass nach seiner Einführung in einen rohrförmigen Bereich (12) der Fußplatte (10) ein radiales Spiel zwischen diesen Teilen (8, 10) verbleibt, das folglich einen ringförmigen Zwischenraum bildet, und dadurch, dass ein Verbindungsmaterial (16), insbesondere ein Material des Elastomer-Typs, thermoplastisch oder warmaushärtend, den ringförmigen Zwischenraum ausfüllt.

2. Befestigungsvorrichtung für Radabdeckung nach Anspruch 1, **dadurch gekennzeichnet, dass** das Verbindungsmaterial (16) zwischen dem Tragrohr (8) und der Fußplatte (10) ein geschmeidiges Material ist, das eine Verbindung mit stoßdämpfenden Eigenschaften bildet.

3. Befestigungsvorrichtung für Radabdeckung nach Anspruch 1 oder 2, **dadurch gekennzeichnet, dass** der rohrförmige Bereich (12) der Fußplatte (10) im Innern reliefartige Strukturen aufweist, wie etwa Rillen (14), die zu seiner Achse A parallel verlaufen, während das Endstück des Tragrohrs (8) an der Außenseite eine Struktur wie etwa Rasterung oder Rändelung (15) aufweist, wobei das Verbindungsmaterial (16) die Räume zwischen den reliefartigen Strukturen (14) des rohrförmigen Bereichs (12) der Fußplatte (10) ausfüllt und auch in die gerasterten oder gerändelten Strukturen (15) des Tragrohrs (8) so eindringt, dass eine Verdreh-Sperre des Tragrohrs (8) gegenüber der Fußplatte (10) gewährleistet ist.

4. Befestigungsvorrichtung für Radabdeckung nach einem der Ansprüche 1 bis 3, **dadurch gekennzeichnet, dass** das Verbindungsmaterial (16) durch Einspritzen oder durch Hineinlaufen aufgrund der Schwerkraft eingeführt wird, um das radiale Spiel zwischen dem Tragrohr (8) und der Fußplatte (10) auszufüllen.

5. Befestigungsvorrichtung für Radabdeckung nach einem der Ansprüche 1 bis 4, **dadurch gekennzeichnet, dass** das Verbindungsmaterial (16) eine Verlängerung von der Fußplatte (10) nach außen um das Tragrohr (8) herum besitzt.

6. Befestigungsvorrichtung für Radabdeckung nach einem der Ansprüche 1 bis 5, **dadurch gekennzeichnet, dass** das Tragrohr (8) und die Fußplatte (10) aus Aluminiumlegierung hergestellt sind.

7. Befestigungsvorrichtung für Radabdeckung nach einem der Ansprüche **1** bis 6, **dadurch gekennzeichnet, dass** das Tragrohr (8) ein gekröpftes Tragrohr ist.

## Claims

1. A fixing device (7) for a mudguard (1) of a road vehicle or agricultural vehicle, of the type comprising one or more supporting tubes, the or each supporting tube (8) being associated with a socket base (10) which itself is fixed to a part of the vehicle concerned, particularly to the chassis (6) of said vehicle, **characterised in that** an end part of the supporting tube (8) is such that it after it has been introduced into a tubular part (12) of the socket base (10) a radial clearance remains between said parts (8, 10) which thus defines an annular gap, and that a joint material (16), particularly an elastomeric, thermoplastic or thermosetting type of material, fills the annular gap.

2. A mudguard fixing device according to claim 1, **characterised in that** the joint material (16) between the supporting tube (8) and the socket base (10) is a flexible material which forms a joint having damping properties.

3. A mudguard fixing device according to claim 1 or 2, **characterised in that** the tubular part (12) of the socket base (10) has raised formations in its interior, such as ribs (14) parallel to its axis (A), whilst the end part of the supporting tube (8) has an external formation such as a serrated or knurled formation (15), the joint material (16) filling the spaces between the raised formations (14) of the tubular part (12) of the socket base (10) and also penetrating the formation such as the serrated or knurled formation (15) of the supporting tube (8) so as to ensure that the supporting tube (8) is fixed in rotation in relation to the socket base (10).

4. A mudguard fixing device according to any one of claims 1 to 3, **characterised in that** the joint material (16) is introduced by injection or by gravity casting in order to fill the radial clearance between the supporting tube (8) and the socket base (10).

5. A mudguard fixing device according to any one of claims 1 to 4, **characterised in that** the joint material (16) has an extension outside the socket base (10) around the supporting tube (8).

6. A mudguard fixing device according to any one of claims 1 to 5, **characterised in that** the supporting tube (8) and the socket base (10) are made of aluminium alloy.

7. A mudguard fixing device according to any one of claims 1 to 6, **characterised in that** the supporting tube (8) is an elbowed supporting tube.
